# EUROPEAN PATENT APPLICATION

(11) **EP 4 568 348 A1**
(43) Date of publication of application: **11.06.2025**
(21) Application number: 23307153.9
(22) Date of filing: 07.12.2023
(51) Int. Cl.: H04W 40/02

(54) **PARTIAL UPDATE OF URSP RULES IN UE**

(71) Applicant: THALES DIS FRANCE SAS, 92190 Meudon (FR)
(72) Inventor: PAULIAC, Mireille, 13470 Carnoux En Provence (FR); PHAN, Ly Thanh, 92350 Plessis Le Robinson (FR); DANY, Vincent, 13400 Aubagne (FR); COLLET, Hervé, 13600 La Ciotat (FR); VOYER, Jérôme, 13390 Auriol (FR)
(74) Representative: Lotaut, Yacine Diaw

(57) **Abstract**

The invention relates to a method to manage User Equipment (UE) Route Selection Policies (URSP) rules in an operating system of a UE having at least an application requiring a URSP rule to be stored in the UE, said URSP rule comprising fields among which a Rule Precedence, a Traffic Descriptor and one or several Route Selection Descriptors, said method comprising the following steps, in the UE:
a) reception from a remote server of a partial update command comprising one or a combination of URSP rule selection criteria and one or several actions to be performed on one or several URSP rules;
b) using the received selection criteria to identify the URSP rule(s) considered in the update;
c) performing the received action(s) in the fields of the targeted URSP rule(s);
d) using the URSP rule(s) as newly stored for next execution of the application.

## Description

### Field of the invention

The present invention relates to a method to manage UE Route Selection Policies (URSP) rules in an operating system of a user equipment UE having at least a service requiring a URSP rule to be stored by the UE for the service.

The invention also pertains to a remote server and a User Equipment implementing said method.

### Background of the invention

The invention concerns telecommunication system. In particular the method concerns the update of UE Route Selection Policies (URSP in the following) stored in a User Equipment (UE in the following). Designated by the terms URSP is a set of one of more URSP rules that are stored in the LTE (User Equipment). URSP includes information mapping certain data, i.e. applications, to 5G PDU session connectivity parameters. Typically, the URSP is used by the UE to determine if an application started in the UE can use an already established PDU session or if there is a need to trigger the establishment of a new PDU session.

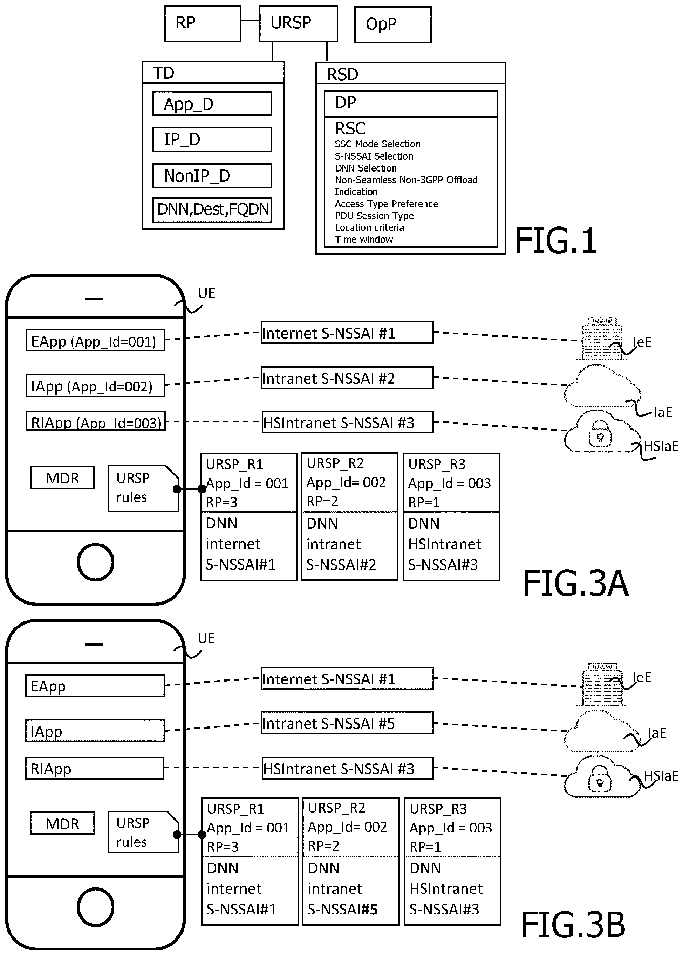

Each URSP rule contains several fields: precedence value, traffic descriptor and a list of route selection descriptors. The traffic descriptor and the route selection description contain components. This is detailed hereinafter in the description of [Fig. 1].

It happens that a 3GPP service has to update field(s)/component(s) of one or several URSP rule(s) stored in the UE while the UE can store many URSP rules. URSP rules are stored in UE's persistent memory or in a USIM. The sending of all the URSP rules as currently defined in case of a need of an update is resource consuming. Additionally, it requires the entity sending the update to know all the different URSP rules. Also URSP rules must be consolidated somewhere, typically in a machine running a database, to send update containing all the URSP rules due to the structure of the rules which include some size constraints.

Further alternative and advantageous solutions would, accordingly, be desirable in the art.

### Summary of the invention

The present invention aims at optimizing the update of the URSP rules stored in the UE in order to avoid the sending of all the URSP rules to the UE.

The present invention is defined, in its broadest sense, as a method to manage User Equipment (UE) Route Selection Policies (URSP) rules in an operating system of a UE having at least an application requiring a URSP rule to be stored in the UE, said URSP rule comprising fields among which a Rule Precedence, a Traffic Descriptor and one or several Route Selection Descriptors, said method comprising the following steps, in the UE:
a) reception from a remote server of a partial update command comprising one or a combination of URSP rule selection criteria and one or several actions to be performed on one or several URSP rules;
b) using the received selection criteria to identify the URSP rule(s) considered in the update;
c) performing the received action(s) in the fields of the targeted URSP rule(s);
d) using the URSP rule(s) as newly stored for next execution of the application.

With the invention, the entity sending the updated URSP rules has to know only the fields it targets and the update is simple to handle. The invention optimizes the bandwidth compared to the sending of all the URSP rules.

Additionally, in case of storage of URSP rules in the UICC, the length of the message to be handled by the UICC is smaller. The implementation of the invention modifies the signaling only. The USIM/OTA are advantageously involved in the invention.

The invention enables to target only the fields/components to be updated. This is a new advantageous feature. The invention is based on the sending of information to target the fields/components to be updated and associated actions for the targeted fields/components. For this purpose, it is proposed according to the invention to send to the LTE at least a rule selection criteria and action(s) to be performed. The URSP rule update commands are a list of Rule Selection criteria with associated Action that the remote server sends to the UE.

According to a specific feature of the invention, the selection criteria including application selection criteria, the actions to be performed on URSP rules are mutualized for a set of different applications.

Such a feature enables to send a single message to address several changes concerning several distinct Applications while keeping a compact format for the partial update of the invention.

According to a specific embodiment, the partial update command comprises a condition as "if field(s) of URSP rule(s) match the selection criteria" and a conditioned instruction "then perform the action(s) in targeted URSP rule(s)".

Typically, an update command is formulated with a Rule selection criteria: e.g. if traffic descriptor contains xxxxx and Actions: e.g. replaces xxxx with yyyy.

Such an embodiment is based on a conditional instruction for an operating system of the UE which, after selection of a URSP, then performs the requested modification in the URSP. It is here noted that the operating system is the one of the entity which stores the URSP rules. It may be the one of the mobile equipment itself or the one of a secure component installed in the mobile equipment, e.g. the UICC.

According to a specific feature, selection criteria are chosen among components of Traffic Descriptor, components of Route Selection Descriptor, Rule Precedences.

Such feature addresses relevant parameters to select URSP rules. Hereafter is the complete list of components of Traffic Descriptor where some more might be added in next releases of the standards:
Match-all type;
OS Id + OS App Id type;
IPv4 remote address type;
IPv6 remote address/prefix length type;
Protocol identifier/next header type;
Single remote port type;
Remote port range type;
IP 3 tuple type;
Security parameter index type;
Type of service/traffic class type;
Flow label type;
Destination MAC address type;
802.1Q C-TAG VID type;
802.1Q S-TAG VID type;
802.1Q C-TAG PCP/DEI type;
802.1Q S-TAG PCP/DEI type;
Ethertype type;
DNN type;
Connection capabilities type;
Destination FQDN;
Regular expression;
OS App Id type.

Hereafter is the complete list of components of Route Selection Descriptor where some more might be added in next releases:
SSC mode type;
S-NSSAI type;
DNN type;
PDU session type;
Preferred access type;
Multi-access preference type;
Non-seamless non-3GPP offload indication type;
Location criteria type;
Time window type.

According to another specific feature, actions are chosen among delete, replace, create, change priority and a field in the URSP rule or a complete URSP rule.

Such actions enable to address the main situations where a URSP rule has to be changed.

According to an advantageous feature, after the execution of the URSP partial update command, if requested by the remote server, the method comprises the step of sending, by the LTE to the remote server, an execution report of the update that contains the execution status of the update command(s).

This advantageous feature enables the remote server to have a confirmation of the update of the URSP rule and to act upon that confirmation accordingly.

The invention also relates to a remote server adapted to manage User Equipment (UE) Route Selection Policies (URSP) rules in an operating system of a LTE having at least an application requiring a URSP rule to be stored in the LTE, said URSP rule comprising fields among which a Rule Precedence, a Traffic Descriptor and one or several Route Selection Descriptors, said remote server being configured to generate URSP rule update commands based on current URSP rules, subscriber data information and URSP usage and to send to a LTE a partial update command comprising one or a combination of URSP rule selection criteria and one or several actions to be performed on one or several URSP rules.

The remote server generates URSP rule update commands based on, for example, frequency of use of URSP rules (typically from an analytic function, for example NWDAF, or from the LTE itself), subscriber data information (typically from UDM), the existing URSP rules for a given subscriber (typically from the Home PCF or a Visited PCF), geolocation of the UE.

According to a specific feature, the remote server is configured to receive an execution report of the update that contains the execution status of the update command(s).

Such a report enables the remote server to mirror locally to the server the contents of the UE with regards to the URSP rules stored in the UE.

According to a specific feature, the remote server is configured to assess a frequency of use of a URSP rule based on URSP usage historical data.

This feature uses typically historical data obtained from a NetWork Data Analytic Function. URSP usage historical data are advantageously obtained from a NetWork Data Analytic Function.

The present invention at last relates to a User Equipment UE having an operating system and at least an application requiring a User Equipment (UE) Route Selection Policies (URSP) rule to be stored in the UE, said UE being configured to manage updates of URSP rules, said URSP rule comprising fields among which a Rule Precedence, a Traffic Descriptor and one or several Route Selection Descriptors, said UE being configured to:
a) receive from a remote server a partial update command comprising one or a combination of URSP rule selection criteria and one or several actions to be performed on one or several URSP rules;
b) using the received selection criteria to identify the URSP rule(s) considered in the update;
c) performing the received action(s) in the fields of the targeted URSP rule(s);
d) using the URSP rule(s) as newly stored for next execution of the application.

To the accomplishment of the foregoing and related ends, one or more embodiments comprise the features hereinafter fully described and particularly pointed out in the claims.

### Brief description of the drawings

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
[Fig 1] schematically shows the structure and content of URSP rules;
[Fig 2] schematically shows a flowchart of the method of the invention;
[Fig 3A] and [Fig 3B] schematically show a UE having stored URSP rules respectively before and after a first partial update of URSP according to the invention;
[Fig 4] shows a LTE having stored URSP rules after a second partial update of URSP according to the invention;
[Fig 5] shows a LTE having stored URSP rules after a third partial update of URSP according to the invention.

### Detailed description of embodiments of the invention

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

[Fig 1] schematically shows the structure and content of URSP rules.

Each URSP rule has an associated rule precedence RP and optional parameters OpP which are described elsewhere and will not be discussed further. Each URSP rule has a Traffic Descriptor TD and a Route Selection Descriptor List RSD.

The Traffic Descriptor typically comprises an Application Descriptor App_D, an IP Descriptor IP_D, a Non-IP Descriptor NonIP_D, Data Network Name DNN, a destination Dest, a Fully Qualified Domain Name FQDN, Connection Capabilities CCap.

The Application Descriptor App_D is typically a OSId and a OSAppId. The IP Descriptor IP_D is typically an IP Address, a Port, a Protocol ID. The Non IP Descriptor is typically a Destination info for Non-IP data. It is here noted that standards evolve and new Descriptors defined in the future in relation with URSP rules are, of course, concerned by the invention.

The Route Selection Descriptor List has a Descriptor Precedence DP and Route Selection Descriptor Components RSDC of various types, including but not limited to the following types: SSC Mode, S-NSSAI, DNN, Non-Seamless Non-3GPP Offload Indication, Preferred access type, Multi-access preference, PDU Session Type, Location criteria and Time window, as specified in 3GPP TS 24.526.

Upon reception of the change request information, the UE runs the selection criteria on the URSP rules, then perform the action on the rules which match the selection criteria.

The selection criteria include Traffic Descriptors, Routing descriptors and more generally any values or string expression in the URSP rule, or associated information, e.g. frequency of use of a rule, user preference etc. The action includes: delete, replace, create, change the priority of a rule and a field in the URSP rule or a complete URSP rule.

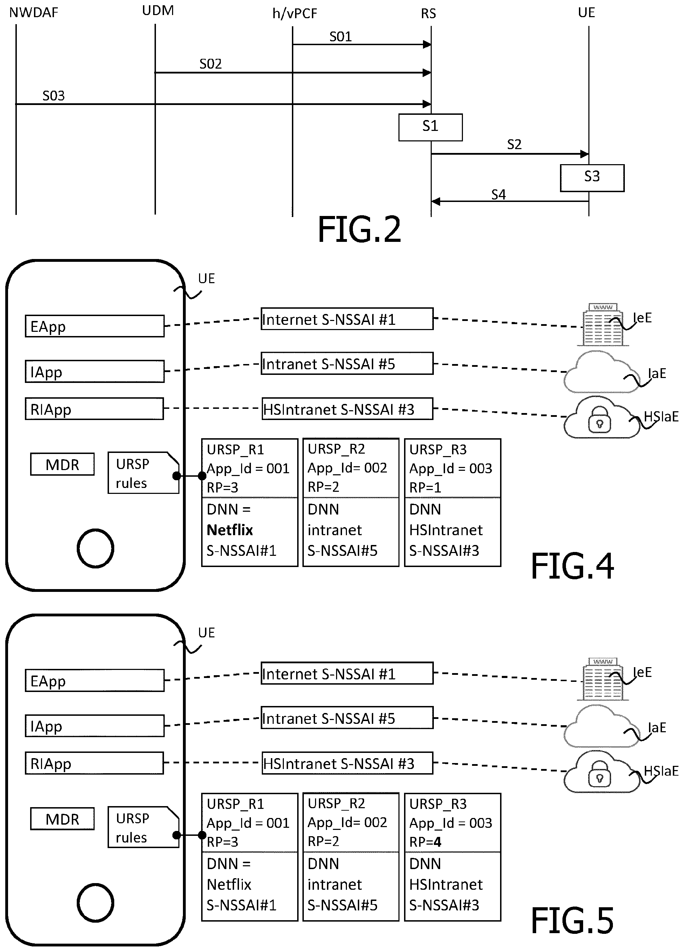

[Fig 2] schematically shows the method of the invention in a New Radio Generation context. In preliminary steps S01, S02 and S03, a remote server RS receives respectively a current URSP applicable to a UE from a home or a visited Policy Control Function h/vPCF, subscribed information from a Unified Data Management UDM and URSP usage information from a NetWork Data Analytic Function.

In a step S 1, the remote server RS generates URSP rule update commands.

The generated commands comprising selection criteria and an action are then sent to the UE in a step S2. In a step S3 the UE selects the URSP rules based on the selection criteria and performs the action(s) on the URSP rule(s). In an optional step S4, the UE sends a URSP rule update execution status to the remote server RS.

[Fig 3A] and [Fig 3B] schematically show a User Equipment UE having stored URSP rules respectively before and after partial update of URSP according to the invention.

The LTE comprises an OS and several applications. In the example, as shown on [Fig 3A] the UE has an external Application EApp dedicated to be executed in an Internet environment IeE, an internal Application IApp dedicated to be executed in an Intranet environment IaE and a restricted internal Application RIApp dedicated to be executed in a High Security Intranet environment HSIaE. Each of these applications has an Application Identifier App_Id, here 001, 002 and 003.

URSP rules URSP_R1, URSP_R2 and URSP_R3 are stored for each application in the UE. Each application has Application Descriptor App_D associated Route Selection Components in the Route Selection Descriptor of the URSP rule. The Route Selection Components are here a DNN Selection and a Slice S-NSSAI Selection. Each application has also an associated Rule Precedence RP. Here such Rule Precedence are 3 for the Application App _Id=001, 2 for the Application App_Id=002 and 3 for the Application App _Id=003.

Before the update of URSP rule according to the invention, the DNN is "Internet" for the first rule URSP_R1 having App _Id=001 and the Slice Selection S-NSSAI is #1. The DNN is "Intranet" for the second rule URSP_R2 having App_Id=002 and the Slice Selection S-NSSAI is #2. The DNN is "High Security Intranet" for the third rule URSP_R3 having App_Id=003 and the Slice Selection S-NSSAI is #3.

For their execution, each application EApp, IApp, RIApp use respectively Internet, an Intranet and a High Security Intranet and the slice as indicated in S-NSSAI for their interaction with, respectively the Internet Environment IeE, the Intranet Environment IaE and the High Security Intranet Environment HSIaE.

The update of the invention is performed once the LTE receives an Update Command comprising a Traffic Descriptor selection criterion, here for example an Application Descriptor App_Id=002 and an action to be performed on one Route Selection Descriptor, here the replacement of the previous Slice Selection S-NSSAI by another value, here #5. The partial command of the invention is advantageously the following instruction: If App _Id=002, then S-NSSAI shall equal to #5.

More generally a message of the invention comprises advantageously an instruction of the following kind as an update command of the invention: if Traffic Descriptor TD contains xxx, then -action-, e.g. replaces #a with #b in Route Selection Descriptor component yyy.

As shown on [Fig 3B], after the update the S-NSSAI component in rule URSP_R2 has been replaced by #5.

After the update, for its execution, the internal application IApp having the Application Descriptor App_Id=002 uses Intranet and the Slice#5, instead of the previously used Slice #2, for its interaction with the Intranet Environment IaE and the High Security Intranet Environment HSIaE.

[Fig.4] schematically shows a further partial update of the URSP rules. The update command is formulated as follows: if Rule Precedence is 03 and App_Id is 001 then DNN shall equal to Netflix. After reception of the update command, the LTE proceeds to a selection of URSP having a Rule Precedence of 03 and an App_Id equal to 001. The URSP_R1 is thus selected and modified to have a DNN equal to Netflix.

[Fig.5] schematically shows a further partial update of the URSP rules. The update command is formulated as follows: If DNN is secintranet

then Rule Precedence equals to 04. After reception of the update command, the UE proceeds to a selection of URSP having a DNN equal to secintranet. The URSP_R3 is thus selected and modified to have a Rule Precedence equal to 04.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to manage User Equipment (UE) Route Selection Policies (URSP) rules in an operating system of a UE having at least an application requiring a URSP rule to be stored in the UE, said URSP rule comprising fields among which a Rule Precedence, a Traffic Descriptor and one or several Route Selection Descriptors, said method comprising the following steps, in the UE:
a) reception from a remote server of a partial update command comprising one or a combination of URSP rule selection criteria and one or several actions to be performed on one or several URSP rules;
b) using the received selection criteria to identify the URSP rule(s) considered in the update;
c) performing the received action(s) in the fields of the targeted URSP rule(s);
d) using the URSP rule(s) as newly stored for next execution of the application.

2. Method according to claim 1, wherein, the selection criteria including application selection criteria, the actions to be performed on URSP rules are mutualized for a set of different rules.

3. Method according to claim 1, wherein, the partial update command comprises a condition as "if field(s) of URSP rule(s) match the selection criteria" and a conditioned instruction "then perform the action(s) in targeted URSP rule(s)".

4. Method according to claim 1, wherein selection criteria are chosen among components of Traffic Descriptor, components of Route Selection Descriptor, Rule Precedences.

5. Method according to claim 1, wherein actions are chosen among delete, replace, create, change priority and a field in the URSP rule or a complete URSP rule.

6. Method according to claim 1, said method comprising, after the execution of the URSP partial update command, if requested by the remote server, the step of sending, by the UE to the remote server, an execution report of the update that contains the execution status of the update command(s).

7. Remote server adapted to manage User Equipment (UE) Route Selection Policies (URSP) rules in an operating system of a UE having at least an application requiring a URSP rule to be stored in the UE, said URSP rule comprising fields among which a Rule Precedence, a Traffic Descriptor and one or several Route Selection Descriptors, said remote server being configured to generate URSP rule update commands based on current URSP rules, subscriber data information and URSP usage and to send to a LTE a partial update command comprising one or a combination of URSP rule selection criteria and one or several actions to be performed on one or several URSP rules.

8. Remote server according to claim 7, wherein the remote server is configured to receive an execution report of the update that contains the execution status of the update command(s).

9. Remote server according to one of claims 7 and 8, wherein the remote server is configured to assess a frequency of use of a URSP rule based on URSP usage historical data.

10. Remote server according to claim 9, wherein said URSP usage historical data are obtained from an Analytic Function.

11. User equipment UE having an operating system and at least an application requiring a User Equipment (UE) Route Selection Policies (URSP) rule to be stored in the UE, said UE being configured to manage updates of URSP rules, said URSP rule comprising fields among which a Rule Precedence, a Traffic Descriptor and one or several Route Selection Descriptors, said LTE being configured to:
a) receive from a remote server a partial update command comprising one or a combination of URSP rule selection criteria and one or several actions to be performed on one or several URSP rules;
b) using the received selection criteria to identify the URSP rule(s) considered in the update;
c) performing the received action(s) in the fields of the targeted URSP rule(s);
d) using the URSP rule(s) as newly stored for next execution of the application.
